# EUROPEAN PATENT SPECIFICATION

(11) **EP 1 374 223 B1**
(45) Date of publication and mention of the grant of the patent: **05.09.2007**
(21) Application number: 02725288.1
(22) Date of filing: 22.03.2002
(51) Int. Cl.: G10L 15/06, G10L 15/14, G10L 15/12

(54) **VOICE RECOGNITION SYSTEM USING IMPLICIT SPEAKER ADAPTATION**
SPRACHERKENNUNGSYSTEM MITTELS IMPLIZITER SPRECHERADAPTION
SYSTEME DE RECONNAISSANCE VOCALE AVEC ADAPTATION IMPLICITE AU LOCUTEUR

(30) Priority: 28.03.2001 US 821606
(43) Date of publication of application: 02.01.2004
(60) Divisional application: 05025989.4
(73) Proprietor: QUALCOMM INCORPORATED, San Diego, CA 92121-1714 (US)
(72) Inventor: MALAYATH, Narendranath, San Diego, CA 92128 (US); DEJACO, Andrew, P., San Diego, CA 92131 (US); CHANG, Chienchung, Rancho Santa Fe, CA 92067 (US); JALIL, Suhail, San Diego, CA 92121-1714 (US); BI, Ning, San Diego, CA 92128 (US); GARUDADRI, Harinath, San Diego, CA 92129 (US)
(74) Representative: Wagner, Karl H.
(86) International application number: PCT/US2002/008727
(87) International publication number: WO 2002/080142

(56) References cited:
- EP-A- 1 011 094
- WO-A-02/07148
- WO-A-02/21513
- US-A- 5 091 947
- US-A- 5 734 793
- FARRELL K R: "Model combination and weight selection criteria for speaker verification" NEURAL NETWORKS FOR SIGNAL PROCESSING IX: PROCEEDINGS OF THE 1999 IEEE SIGNAL PROCESSING SOCIETY WORKSHOP (CAT. NO.98TH8468), 1999, pages 439-448, XP002212899 MADISON, WI, USA, Piscataway, NJ, USA, IEEE, USA ISBN: 0-7803-5673-X

## Description

### BACKGROUND

### Field

The present invention relates to speech signal processing. More particularly, the present invention relates to a novel voice recognition method and apparatus for achieving improved performance through unsupervised training.

### Background

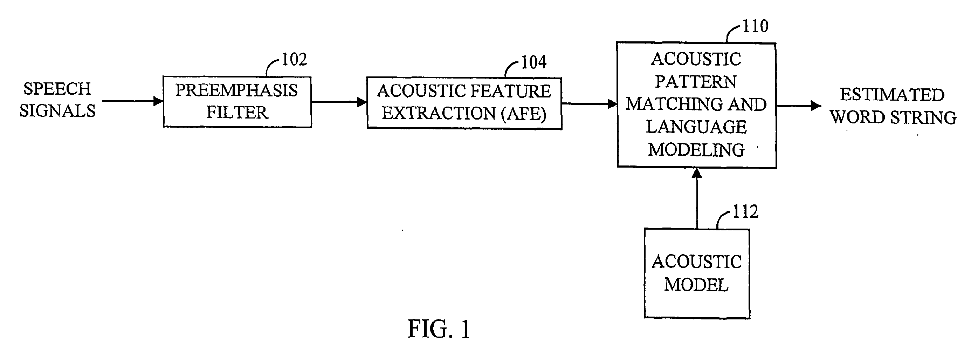

Voice recognition represents one of the most important techniques to endow a machine with simulated intelligence to recognize user voiced commands and to facilitate human interface with the machine. Systems that employ techniques to recover a linguistic message from an acoustic speech signal are called voice recognition (VR) systems. **FIG. 1** shows a basic VR system having a preemphasis filter **102,** an acoustic feature extraction (AFE) unit **104,** and a pattern matching engine **110.** The AFE unit **104** converts a series of digital voice samples into a set of measurement values (for example, extracted frequency components) called an acoustic feature vector. The pattern matching engine **110** matches a series of acoustic feature vectors with the templates contained in a VR acoustic model **112.** VR pattern matching engines generally employ either Dynamic Time Warping (DTW) or Hidden Markov Model (HMM) techniques. Both DTW and HMM are well known in the art, and are described in detail in Rabiner, L. R. and Juang, B. H., FUNDAMENTALS OF SPEECH RECOGNITION, Prentice Hall, 1993. When a series of acoustic features matches a template in the acoustic model **112,** the identified template is used to generate a desired format of output, such as an identified sequence of linguistic words corresponding to input speech.

As noted above, the acoustic model **112** is generally either a HMM model or a DTW model. A DTW acoustic model may be thought of as a database of templates associated with each of the words that need to be recognized. In general, a DTW template consists of a sequence of feature vectors that has been averaged over many examples of the associated word. DTW pattern matching generally involves locating a stored template that has minimal distance to the input feature vector sequence representing input speech. A template used in an HMM based acoustic model contains a detailed statistical description of the associated speech utterance. In general, a HMM template stores a sequence of mean vectors, variance vectors and a set of transition probabilities. These parameters are used to describe the statistics of a speech unit and are estimated from many examples of the speech unit. HMM pattern matching generally involves generating a probability for each template in the model based on the series of input feature vectors associated with the input speech. The template having the highest probability is selected as the most likely input utterance.

"Training" refers to the process of collecting speech samples of a particular speech segment or syllable from one or more speakers in order to generate templates in the acoustic model **112.** Each template in the acoustic model is associated with a particular word or speech segment called an utterance class. There may be multiple templates in the acoustic model associated with the same utterance class. "Testing" refers to the procedure for matching the templates in the acoustic model to a sequence of feature vectors extracted from input speech. The performance of a given system depends largely upon the degree of match between the input speech of the end-user and the contents of the database, and hence on the match between the reference templates created through training and the speech samples used for VR testing.

The two common types of training are supervised training and unsupervised training. In supervised training, the utterance class associated with each set of training feature vectors is known a priori. The speaker providing the input speech is often provided with a script of words or speech segments corresponding to the predetermined utterance classes. The feature vectors resulting from the reading of the script may then be incorporated into the acoustic model templates associated with the correct utterance classes.

In unsupervised training, the utterance class associated with a set of training feature vectors is not known a priori. The utterance class must be correctly identified before a set of training feature vectors can be incorporated into the correct acoustic model template. In unsupervised training, a mistake in identifying the utterance class for a set of training feature vectors can lead to a modification in the wrong acoustic model template. Such a mistake generally degrades, rather than improves, speech recognition performance. In order to avoid such a mistake, any modification of an acoustic model based on unsupervised training must generally be done very conservatively. A set of training feature vectors is incorporated into the acoustic model only if there is relatively high confidence that the utterance class has been correctly identified. Such necessary conservatism makes building an SD acoustic model through unsupervised training a very slow process. Until the SD acoustic model is built in this way, VR performance will probably be unacceptable to most users. Document US5091947 solves this problem by using in parallel both a speaker dependent and a speaker independent acoustic model.

Optimally, the end-user provides speech acoustic feature vectors during both training and testing, so that the acoustic model **112** will match strongly with the speech of the end-user. An individualized acoustic model that is tailored to a single speaker is also called a speaker dependent (SD) acoustic model. Generating an SD acoustic model generally requires the end-user to provide a large amount of supervised training samples. First, the user must provide training samples for a large variety of utterance classes. Also, in order to achieve the best performance, the end-user must provide multiple templates representing a variety of possible acoustic environments for each utterance class. Because most users are unable or unwilling to provide the input speech necessary to generate an SD acoustic model, many existing VR systems instead use generalized acoustic models that are trained using the speech of many "representative" speakers. Such acoustic models are referred to as speaker independent (SI) acoustic models, and are designed to have the best performance over a broad range of users. SI acoustic models, however, may not be optimized to any single user. A VR system that uses an SI acoustic model will not perform as well for a specific user as a VR system that uses an SD acoustic model tailored to that user. For some users, such as those having a strong foreign accents, the performance of a VR system using an Sl acoustic model can be so poor that they cannot effectively use VR services at all.

Optimally, an SD acoustic model would be generated for each individual user. As discussed above, building SD acoustic models using supervised training is impractical. But using unsupervised training to generate a SD acoustic model can take a long time, during which VR performance based on a partial SD acoustic model may be very poor. There is a need in the art for a VR system that performs reasonably well before and during the generation of an SD acoustic model using unsupervised training.

### SUMMARY

In accordance with the present invention a voice recognition apparatus, as set forth in claim 1 is provided. Embodiments of the present invention are claimed in the dependent claims.

The methods and apparatus disclosed herein are directed to a novel and improved voice recognition (VR) system that utilizes a combination of speaker independent (SI) and speaker dependent (SD) acoustic models. At least one SI acoustic model is used in combination with at least one SD acoustic model to provide a level of speech recognition performance that at least equals that of a purely SI acoustic model. The disclosed hybrid SI/SD VR system continually uses unsupervised training to update the acoustic templates in the one of more SD acoustic models. The hybrid VR system then uses the updated SD acoustic models, alone or in combination with the at least one SI acoustic model, to provide improved VR performance during VR testing.

The word "exemplary" is used herein to mean "serving as an example, instance, or illustration." Any embodiment described as an "exemplary embodiment" is not necessarily to be construed as being preferred or advantageous over another embodiment.

### BRIEF DESCRIPTION OF THE DRAWINGS

The features, objects, and advantages of the presently disclosed method and apparatus will become more apparent from the detailed description set forth below when taken in conjunction with the drawings in which like reference characters identify correspondingly throughout and wherein:

FIG. 1 shows a basic voice recognition system;

FIG. 2 shows a voice recognition system according to an exemplary embodiment;

**FIG. 3** shows a method for performing unsupervised training.

**FIG. 4** shows an exemplary approach to generating a combined matching score used in unsupervised training.

**FIG. 5** is a flowchart showing a method for performing voice recognition (testing) using both speaker independent (SI) and speaker dependent (SD) matching scores;

**FIG. 6** shows an approach to generating a combined matching score from both speaker independent (SI) and speaker dependent (SD) matching scores; and

### DETAILED DESCRIPTION

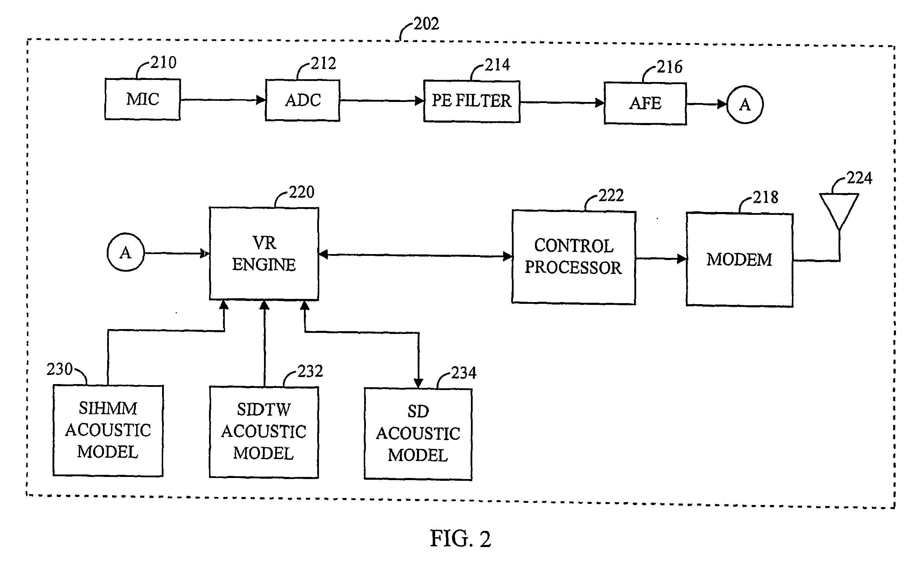

**FIG. 2** shows an exemplary embodiment of a hybrid voice recognition (VR) system as might be implemented within a wireless remote station **202.** In an exemplary embodiment, the remote station **202** communicates through a wireless channel (not shown) with a wireless communication network (not shown). For example, the remote station **202** may be a wireless phone communicating with a wireless phone system. One skilled in the art will recognize that the techniques described herein may be equally applied to a VR system that is fixed (non-portable) or does not involve a wireless channel.

In the embodiment shown, voice signals from a user are converted into electrical signals in a microphone (MIC) **210** and converted into digital speech samples in an analog-to-digital converter (ADC) **212.** The digital sample stream is then filtered using a preemphasis (PE) filter **214,** for example a finite impulse response (FIR) filter that attenuates low-frequency signal components.

The filtered samples are then analyzed in an acoustic feature extraction (AFE) unit **216.** The AFE unit **216** converts digital voice samples into acoustic feature vectors. In an exemplary embodiment, the AFE unit **216** performs a Fourier Transform on a segment of consecutive digital samples to generate a vector of signal strengths corresponding to different frequency bins. In an exemplary embodiment, the frequency bins have varying bandwidths in accordance with a bark scale. In a bark scale, the bandwidth of each frequency bin bears a relation to the center frequency of the bin, such that higher-frequency bins have wider frequency bands than lower-frequency bins. The bark scale is described in Rabiner, L. R. and Juang, B. H., FUNDAMENTALS OF SPEECH RECOGNITION, Prentice Hall, 1993 and is well known in the art.

In an exemplary embodiment, each acoustic feature vector is extracted from a series of speech samples collected over a fixed time interval. In an exemplary embodiment, these time intervals overlap. For example, acoustic features may be obtained from 20-millisecond intervals of speech data beginning every ten milliseconds, such that each two consecutive intervals share a 10-millisecond segment. One skilled in the art would recognize that the time intervals might instead be non-overlapping or have non-fixed duration without departing from the scope of the embodiments described herein.

The acoustic feature vectors generated by the AFE unit **216** are provided to a VR engine **220,** which performs pattern matching to characterize the acoustic feature vector based on the contents of one or more acoustic models **230, 232,** and **234.**

In, the exemplary embodiment shown in **FIG. 2,** three acoustic models are shown: a speaker-independent (SI) Hidden Markov Model (HMM) model **230,** a speaker-independent Dynamic Time Warping (DTW) model **232,** and a speaker-dependent (SD) acoustic model **234.** One skilled in the art will recognize that different combinations of Sl acoustic models may be used in alternate embodiments. For example, a remote station **202** might include just the SIHMM acoustic model **230** and the SD acoustic model **234** and omit the SIDTW acoustic model **232.** Alternatively, a remote station **202** might include a single SIHMM acoustic model **230,** a SD acoustic model **234** and two different SIDTW acoustic models **232.** In addition, one skilled in the art will recognize that the SD acoustic model **234** may be of the HMM type or the DTW type or a combination of the two. In an exemplary embodiment, the SD acoustic model 234 is a DTW acoustic model.

As described above, the VR engine **220** performs pattern matching to determine the degree of matching between the acoustic feature vectors and the contents of one or more acoustic models **230, 232,** and **234.** In an exemplary embodiment, the VR engine **220** generates matching scores based on matching acoustic feature vectors with the different acoustic templates in each of the acoustic models **230, 232,** and **234.** For example, the VR engine **220** generates HMM matching scores based on matching a set of acoustic feature vectors with multiple HMM templates in the SIHMM acoustic model **230.** Likewise, the VR engine **220** generates DTW matching scores based on matching the acoustic feature vectors with multiple DTW templates in the SIDTW acoustic model **232.** The VR engine **220** generates matching scores based on matching the acoustic feature vectors with the templates in the SD acoustic model **234.**

As described above, each template in an acoustic model is associated with an utterance class. In an exemplary embodiment, the VR engine **220** combines scores for templates associated with the same utterance class to create a combined matching score to be used in unsupervised training. For example, the VR engine **220** combines SIHMM and SIDTW scores obtained from correlating an input set of acoustic feature vectors to generate a combined SI score. Based on that combined matching score, the VR engine **220** determines whether to store the input set of acoustic feature vectors as a SD template in the SD acoustic model **234.** In an exemplary embodiment, unsupervised training to update the SD acoustic model **234** is performed using exclusively Sl matching scores. This prevents additive errors that might otherwise result from using an evolving SD acoustic model **234** for unsupervised training of itself. An exemplary method of performing this unsupervised training is described in greater detail below.

In addition to unsupervised training, the VR engine **220** uses the various acoustic models **(230, 232, 234)** during testing. In an exemplary embodiment, the VR engine **220** retrieves matching scores from the acoustic models **(230, 232, 234)** and generates combined matching scores for each utterance class. The combined matching scores are used to select the utterance class that best matches the input speech. The VR engine **220** groups consecutive utterance classes together as necessary to recognize whole words or phrases. The VR engine **220** then provides information about the recognized word or phrase to a control processor **222,** which uses the information to determine the appropriate response to the speech information or command. For example, in response to the recognized word or phrase, the control processor **222** may provide feedback to the user through a display or other user interface. In another example, the control processor **222** may send a message through a wireless modem **218** and an antenna **224** to a wireless network (not shown), initiating a mobile phone call to a destination phone number associated with the person whose name was uttered and recognized.

The wireless modem 218 may transmit signals through any of a variety of wireless channel types including CDMA, TDMA, or FDMA. In addition, the wireless modem 218 may be replaced with other types of communications interfaces that communicate over a non-wireless channel without departing from the scope of the described embodiments. For example, the remote station 202 may transmit signaling information through any of a variety of types of communications channel including land-line modems, T1/E1, ISDN, DSL, ethernet, or even traces on a printed circuit board (PCB).

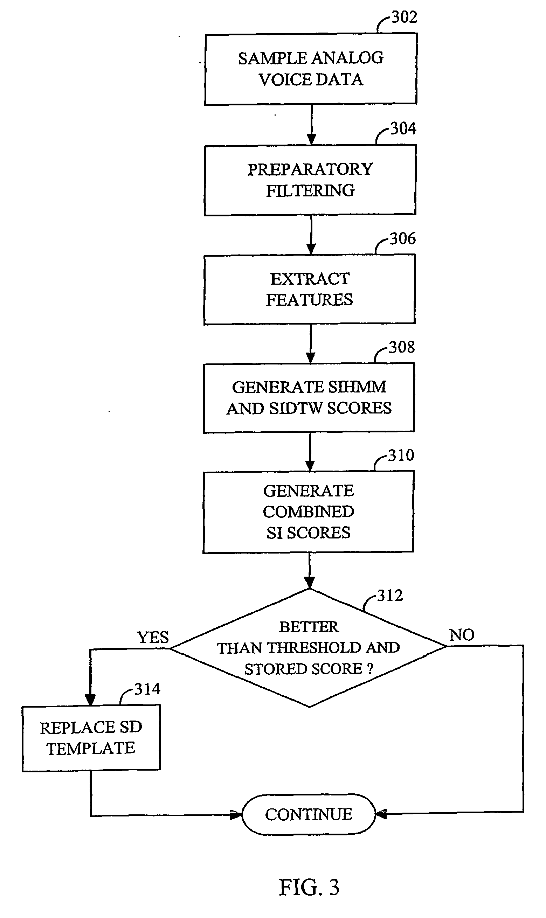

FIG. 3 is a flowchart showing an exemplary method for performing unsupervised training. At step 302, analog speech data is sampled in an analog-to-digital converter (ADC) (212 in FIG. 2). The digital sample stream is then filtered at step 304 using a preemphasis (PE) filter (214 in FIG. 2). At step **306,** input acoustic feature vectors are extracted from the filtered samples in an acoustic feature extraction (AFE) unit **(216 in FIG. 2).** The VR engine **(220** in FIG. 2) receives the input acoustic feature vectors from the AFE unit 216 and performs pattern matching of the input acoustic feature vectors against the contents of the SI acoustic models **(230** and **232** in **FIG. 2).** At step **308,** the VR engine 220 generates matching scores from the results of the pattern matching. The VR engine **220** generates SIHMM matching scores by matching the input acoustic feature vectors with the SIHMM acoustic model 230, and generates SIDTW matching scores by matching the input acoustic feature vectors with the SIDTW acoustic model 232. Each acoustic template in the SIHMM and SIDTW acoustic models (230 and 232) is associated with a particular utterance class. At step 310, SIHMM and SIDTW scores are combined to form combined matching scores.

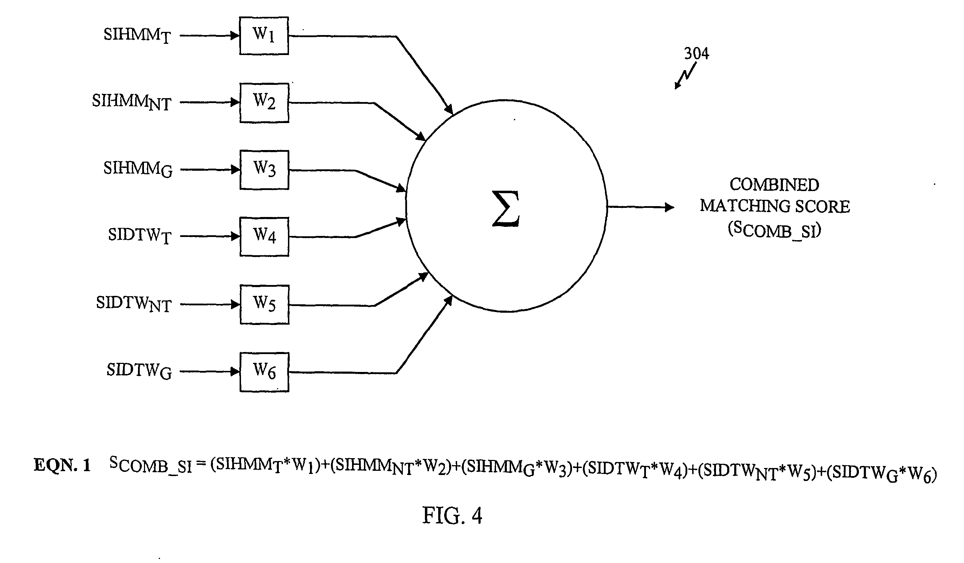

FIG. 4 shows the generation of combined matching scores for use in unsupervised training. In the exemplary embodiment shown, the speaker independent combined matching score S_{COMB_SI} for a particular utterance class is a weighted sum according to **EQN. 1** as shown, where:
SIHMM_{T} is the SIHMM matching score for the target utterance class;
SIHMM_{NT} is the next best matching score for a template in the SIHMM acoustic model that is associated with a non-target utterance class (an utterance class other than the target utterance class);
SIHMM_{G} is the SIHMM matching score for the "garbage" utterance class;
SIDTW_{T} is the SIDTW matching score for the target utterance class;
SIDTW_{NT} is the next best matching score for a template in the SIDTW acoustic model that is associated with a non-target utterance class; and
SIDTW_{G} is the SIDTW matching score for the "garbage" utterance class.

The various individual matching scores SIHMMₙ and SIDTWₙ may be viewed as representing a distance value between a series of input acoustic feature vectors and a template in the acoustic model. The greater the distance between the input acoustic feature vectors and a template, the greater the matching score. A close match between a template and the input acoustic feature vectors yields a very low matching score. If comparing a series of input acoustic feature vectors to two templates associated with different utterances classes yields two matching scores that are nearly equal; then the VR system may be unable to recognize either is the "correct" utterance class.

SIHMM_{G} and SIDTW_{G} are matching scores for "garbage" utterance classes. The template or templates associated with the garbage utterance class are called garbage templates and do not correspond to a specific word or phrase. For this reason, they tend to be equally uncorrelated to all input speech. Garbage matching scores are useful as a sort of noise floor measurement in a VR system. Generally, a series of input acoustic feature vectors should have a much better degree of matching with a template associated with a target utterance class than with the garbage template before the utterance class can be confidently recognized.

Before the VR system can confidently recognize an utterance class as the "correct" one, the input acoustic feature vectors should have a higher degree of matching with templates associated with that utterance class than with garbage templates or templates associated other utterance classes. Combined matching scores generated from a variety of acoustic models can more confidently discriminate between utterance classes than matching scores based on only one acoustic model. In an exemplary embodiment, the VR system uses such combination matching scores to determine whether to replace a template in the SD acoustic model (234 in FIG. 2) with one derived from a new set of input acoustic feature vectors.

The weighting factors (W₁ ... W₆) are selected to provide the best training performance over all acoustic environments. In an exemplary embodiment, the weighting factors (W₁ ... W₆) are constant for all utterance classes. In other words, the Wₙ used to create the combined matching score for a first target utterance class is the same as the Wₙ value used to create the combined matching score for another target utterance class. In an alternate embodiment, the weighting factors vary based on the target utterance class. Other ways of combining shown in FIG. 4 will be obvious to one skilled in the art, and are to be viewed as within the scope of the embodiments described herein. For example, more than six or less than six weighted inputs may also be used. Another obvious variation would be to generate a combined matching score based on one type of acoustic model. For example, a combined matching score could be generated based on SIHMM_{T}, SIHMM_{NT}, and SIHMM_{G}. Or, a combined matching score could be generated based on SIDTW_{T}, SIDTW_{NT}, and SIDTW_{G}.

In an exemplary embodiment, W₁ and W₄ are negative numbers, and a greater (or less negative) value of S_{COMB} indicates a greater degree of matching (smaller distance) between a target utterance class and a series of input acoustic feature vectors. One of skill in the art will appreciate that the signs of the weighting factors may easily be rearranged such that a greater degree of matching corresponds to a lesser value without departing from the scope of the disclosed embodiments.

Turning back to FIG. 3, at step 310, combined matching scores are generated for utterance classes associated with templates in the HMM and DTW acoustic models **(230** and **232).** In an exemplary embodiment, combined matching scores are generated only for utterance classes associated with the best n SIHMM matching scores and for utterance classes associated with the best m SIDTW matching scores. This limit may be desirable to conserve computing resources, even though a much larger amount of computing power is consumed while generating the individual matching scores. For example, if n=m=3, combined matching scores are generated for the utterance classes associated with the top three SIHMM and utterance classes associated with the top three SIDTW matching scores. Depending on whether the utterance classes associated with the top three SIHMM matching scores are the same as the utterance classes associated with the top three SIDTW matching scores, this approach will produce three to six different combined matching scores.

At step 312, the remote station 202 compares the combined matching scores with the combined matching scores stored with corresponding templates (associated with the same utterance class) in the SD acoustic model. If the new series of input acoustic feature vectors has a greater degree of matching than that of an older template stored in the SD model for the same utterance class, then a new SD template is generated from the new series of input acoustic feature vectors. In an embodiment wherein a SD acoustic model is a DTW acoustic model, the series of input acoustic vectors itself constitutes the new SD template. The older template is then replaced with the new template, and the combined matching score associated with the new template is stored in the SD acoustic model to be used in future comparisons.

In an alternate embodiment, unsupervised training is used to update one or more templates in a speaker dependent hidden markov model (SDHMM) acoustic model. This SDHMM acoustic model could be used either in place of an SDDTW model or in addition to an SDDTW acoustic model within the SD acoustic model 234.

In an exemplary embodiment, the comparison at step 312 also includes comparing the combined matching score of a prospective new SD template with a constant training threshold. Even if there has not yet been any template stored in a SD acoustic model for a particular utterance class, a new template will not be stored in the SD acoustic model unless it has a combined matching score that is better (indicative of a greater degree of matching) than the training threshold value.

In an alternate embodiment, before any templates in the SD acoustic model have been replaced, the SD acoustic model is populated by default with templates from the SI acoustic model. Such an initialization provides an alternate approach to ensuring that VR performance using the SD acoustic model will start out at least as good as VR performance using just the Sl acoustic model. As more and more of the templates in the SD acoustic model are updated, the VR performance using the SD acoustic model will surpass VR performance using just the SI acoustic model.

In an alternate embodiment, the VR system allows a user to perform supervised training. The user must put the VR system into a supervised training mode before performing such supervised training. During supervised training, the VR system has a priori knowledge of the correct utterance class. If the combined matching score for the input speech is better than the combined matching score for the SD template previously stored for that utterance class, then the input speech is used to form a replacement SD template. In an alternate embodiment, the VR system allows the user to force replacement of existing SD templates during supervised training.

The SD acoustic model may be designed with room for multiple (two or more) templates for a single utterance class. In an exemplary embodiment, two templates are stored in the SD acoustic model for each utterance class. The comparison at step **312** therefore entails comparing the matching score obtained with a new template with the matching scores obtained for both templates in the SD acoustic model for the same utterance class. If the new template has a better matching score than either older template in the SD acoustic model, then at step **314** the SD acoustic model template having the worst matching score is replaced with the new template. If the matching score of the new template is no better than either older template, then step **314** is skipped. Additionally, at step **312,** the matching score obtained with the new template is compared against a matching score threshold. So, until new templates having a matching score that is better than the threshold are stored in the SD acoustic model, the new templates are compared against this threshold value before they will be used to overwrite the prior contents of the SD acoustic model. Obvious variations, such as storing the SD acoustic model templates in sorted order according to combined matching score and comparing new matching scores only with the lowest, are anticipated and are to be considered within the scope of the embodiments disclosed herein. Obvious variations on numbers of templates stored in the acoustic model for each utterance class are also anticipated. For example, the SD acoustic model may contain more than two templates for each utterance class, or may contain different numbers of templates for different utterance classes.

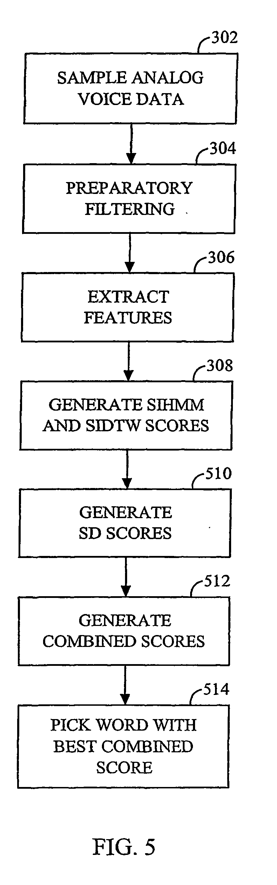

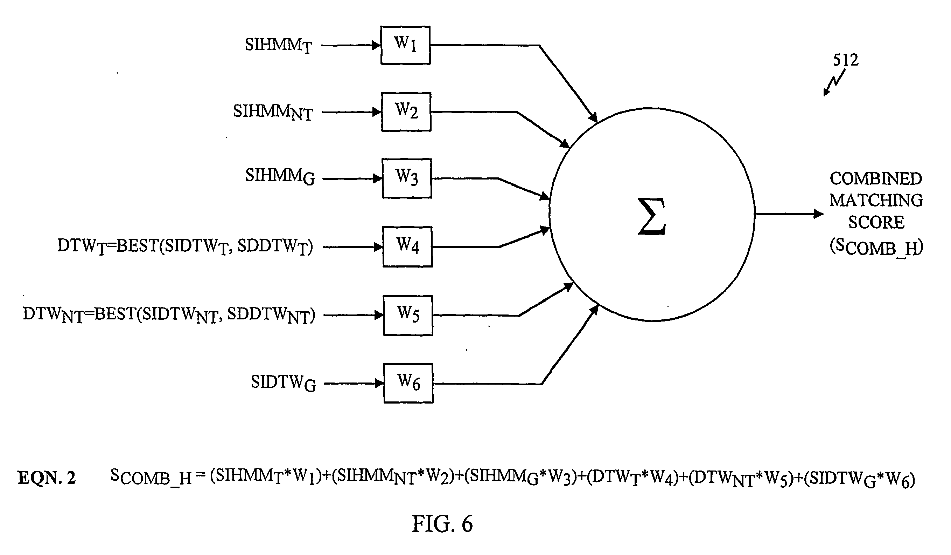

**FIG. 5** is a flowchart showing an exemplary method for performing VR testing using a combination of SI and SD acoustic models. Steps **302, 304, 306,** and **308** are the same as described for **FIG. 3.** The exemplary method diverges from the method shown in **FIG. 3** at step **510.** At step **510,** the VR engine **220** generates SD matching scores based on comparing the input acoustic feature vectors with templates in the SD acoustic model. In an exemplary embodiment, SD matching scores are generated only for utterance classes associated with the best n SIHMM matching scores and the best m SIDTW matching scores. In an exemplary embodiment, n=m=3. Depending on the degree of overlap between the two sets of utterance classes, this will result in generation of SD matching scores for three to six utterance classes. As discussed above, the SD acoustic model may contain multiple templates for a single utterance class. At step **512,** the VR engine **220** generates hybrid combined matching scores for use in VR testing. In an exemplary embodiment, these hybrid combined matching scores are based on both individual SI and individual SD matching scores. At step **514,** the word or utterance having the best combined matching score is selected and compared against a testing threshold. An utterance is only deemed recognized if its combined matching score exceeds this testing threshold. In an exemplary embodiment, the weights [W₁ ... W₆] used to generate combined scores for training (as shown in **FIG. 4)** are equal to the weights [W₁ ... W₆] used to generate combined scores for testing (as shown in **FIG. 6),** but the training threshold is not equal to the testing threshold.

**FIG. 6** shows the generation of hybrid combined matching scores performed at step **512.** The exemplary embodiment shown operates identically to the combiner shown in **FIG. 4,** except that the weighting factor W₄ is applied to DTW_{T} instead of SIDTW_{T} and the weighting factor W₅ is applied to DTW_{NT} instead of SIDTW_{NT}. DTW_{T} (the dynamic time warping matching score for the target utterance class) is selected from the best of the SIDTW and SDDTW scores associated with the target utterance class. Similarly, DTW_{NT} (the dynamic time warping matching score for the remaining non-target utterance classes) is selected from the best of the SIDTW and SDDTW scores associated with non-target utterance classes.

The SI/SD hybrid score S_{COMB_H} for a particular utterance class is a weighted sum according to **EQN. 2** as shown, where SIHMM_{T}, SIHMM_{NT}, SIHMM_{G}, and SIDTW_{G} are the same as in **EQN. 1.** Specifically, in **EQN. 2:**
SIHMM_{T} is the SIHMM matching score for the target utterance class;
SIHMM_{NT} is the next best matching score for a template in the SIHMM acoustic model that is associated with a non-target utterance class (an utterance class other than the target utterance class);
SIHMM_{G} is the SIHMM matching score for the "garbage" utterance class;
DTW_{T} is the best DTW matching score for Sl and SD templates corresponding to the target utterance class;
DTW_{NT} is the best DTW matching score for SI and SD templates corresponding to non-target utterance classes; and
SIDTW_{G} is the SIDTW matching score for the "garbage" utterance class.
Thus, the SI/SD hybrid score S_{COMB_H} is a combination of individual SI and SD matching scores. The resulting combination matching score does not rely entirely on either Sl or SD acoustic models. If the matching score SIDTW_{T} is better than any SDDTW_{T} score, then the SI/SD hybrid score is computed from the better SIDTW_{T} score. Similarly, if the matching score SDDTW_{T} is better than any SIDTW_{T} score, then the SI/SD hybrid score is computed from the better SDDTW_{T} score. As a result, if the templates in the SD acoustic model yield poor matching scores, the VR system may still recognize the input speech based on the SI portions of the SI/SD hybrid scores. Such poor SD matching scores might have a variety of causes including differences between acoustic environments during training and testing or perhaps poor quality input used for training.

In an alternate embodiment, the Sl scores are weighted less heavily than the SD scores, or may even be ignored entirely. For example, DTW_{T} is selected from the best of the SDDTW scores associated with the target utterance class, ignoring the SIDTW scores for the target utterance class. Also, DTW_{NT} may be selected from the best of either the SIDTW or SDDTW scores associated with non-target utterance classes, instead of using both sets of scores.

Though the exemplary embodiment is described using only SDDTW acoustic models for speaker dependent modeling, the hybrid approach described herein is equally applicable to a VR system using SDHMM acoustic models or even a combination of SDDTW and SDHMM acoustic models. For example, by modifying the approach shown in FIG. 6, the weighting factor W₁ could be applied to a matching score selected from the best of SIHMM_{T} and SDHMM_{T} scores. The weighting factor W₂ could be applied to a matching score selected from the best of SIHMM_{NT} and SDHMM_{NT} scores.

Thus, disclosed herein is a VR method and apparatus utilizing a combination of SI and SD acoustic models for improved VR performance during unsupervised training and testing. Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. Also, though the embodiments are described primarily in terms of Dynamic Time Warping (DTW) or Hidden Markov Model (HMM) acoustic models, the described techniques may be applied to other types of acoustic models such as neural network acoustic models.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A voice recognition apparatus comprising:
a speaker independent acoustic model (230, 232);
a speaker dependent acoustic model (234) that is tailored to a speaker;
a voice recognition engine (220); and
a computer readable media storing a set of instructions to perform unsupervised voice recognition training and testing, wherein the set of instructions are adapted
to perform pattern matching of input speech from said speaker with the contents of said speaker independent acoustic model to produce speaker independent pattern matching scores;
to compare the speaker independent pattern matching scores with scores associated with templates stored in said speaker dependent acoustic model; and
if the speaker independent pattern matching scores are higher than the scores associated with templates stored in the speaker dependent acoustic model (234), to store a new template in said speaker dependent acoustic model based on the speaker independent pattern matching scores.

2. The voice recognition apparatus of claim 1, wherein said speaker independent acoustic model (230, 232) comprises at least one hidden markov model (HMM) acoustic model.

3. The voice recognition apparatus of claim 1, wherein said speaker independent acoustic model (230, 232) comprises at least one dynamic time warping (DTW) acoustic model.

4. The voice recognition apparatus of claim 1, wherein said speaker independent acoustic model (230, 232) comprises at least one hidden markov model (HMM) acoustic model and at least one dynamic time warping (DTW) acoustic model.

5. The voice recognition apparatus of claim 1, wherein said speaker independent acoustic model (230, 232) includes at least one garbage template, wherein
said comparing includes comparing the input speech to the at least one garbage template.

6. The voice recognition apparatus of claim 1, wherein said speaker dependent acoustic model (234) comprises at least one dynamic time warping (DTW) acoustic model.

7. The voice recognition apparatus of claim 1, wherein the computer readable media storing a set of instructions to perform unsupervised voice recognition training and testing, the set of instructions are further adapted to:
configure said voice recognition engine to compare a second input speech segment with the contents of said speaker independent acoustic model and said speaker dependent acoustic model to generate at least one combined speaker dependent and speaker independent matching score, and to
identify an utterance class having the best combined speaker dependent and speaker independent matching score, wherein an utterance class is a particular word or speech segment.

8. The voice recognition apparatus of claim 7, wherein said speaker independent acoustic model comprises at least one hidden markov model (HMM) acoustic model.

9. The voice recognition apparatus of claim 7, wherein said speaker independent acoustic model (230, 232) comprises at least one dynamic time warping (DTW) acoustic model.

10. The voice recognition apparatus of claim 7, wherein said speaker independent acoustic model (230, 232) comprises at least one hidden markov model (HMM) acoustic model and at least one dynamic time warping (DTW) acoustic model.

11. The voice recognition apparatus of claim 7, wherein said speaker dependent acoustic model (234) comprises at least one dynamic time warping (DTW) acoustic model.

12. The apparatus of claim 17,
wherein the means for performing and the means for combining are embodied in a voice recognition engine (220).

13. The voice recognition apparatus of claim 7, wherein said speaker independent acoustic model (230, 232) comprises at least one hidden markov model (HMM) acoustic model.

14. The voice recognition apparatus of claim 7, wherein said speaker independent acoustic model (230, 232) comprises at least one dynamic time warping (DTW) acoustic model.

15. The voice recognition apparatus of claim 7, wherein said speaker independent acoustic model (230, 232) comprises at least one hidden markov model (HMM) acoustic model and at least one dynamic time warping (DTW) acoustic model.

16. The voice recognition apparatus of claim 7, wherein said speaker dependent acoustic model (234) comprises at least one dynamic time warping (DTW) acoustic model.

17. The apparatus of claim 1, further comprising:
means for performing pattern matching of the input speech segment with a speaker dependent acoustic template to generate at least one speaker dependent matching score; and
means for combining the at least one speaker independent matching score with the at least one speaker dependent matching score to generate at least one combined matching score.

## Patentansprüche

1. Spracherkennungsvorrichtung, die Folgendes aufweist:
ein sprecherunabhängiges Akustikmodell (230, 232);
ein sprecherabhängiges Akustikmodell (234), das auf einen Sprecher zugeschnitten ist;
eine Spracherkennungs-Engine bzw. -element (220); und
ein computerlesbares Medium, das einen Satz von Instruktionen speichert, um nicht überwachtes Spracherkennungstrainieren und
- testen durchzuführen, wobei der Satz von Instruktionen angepasst ist, um Musterabbildung bzw. -abgleich von Eingabesprache von dem Sprecher mit den Inhalten des sprecherunabhängigen Akustikmodells durchzuführen, um sprecherunabhängige Musterabgleichswerte zu produzieren;
um die sprecherunabhängigen Musterabgleichswerte mit Werten assoziiert mit Templates bzw. Vorlagen, die in dem sprecherabhängigen Akustikmodell gespeichert sind, zu vergleichen; und
um eine neue Vorlage in dem sprecherabhängigen Akustikmodell, basierend auf den sprecherunabhängigen Musterabgleichswerten, zu speichern, wenn die sprecherunabhängigen Musterabgleichswerte höher als die Werte sind, die mit den Vorlagen assoziiert sind, die in dem sprecherabhängigen Akustikmodell (234) gespeichert sind.

2. Spracherkennungsvorrichtung gemäß Anspruch 1, wobei das sprecherunabhängige Akustikmodell (230, 232) wenigstens ein Hidden-Markov-Modell-(HMM)-Akustikmodell aufweist.

3. Spracherkennungsvorrichtung gemäß Anspruch 1, wobei das sprecherunabhängige Akustikmodell (230, 232) wenigstens ein Dynamic-Time-Warping-(DTW)-Akustikmodell aufweist.

4. Spracherkennungsvorrichtung gemäß Anspruch 1, wobei das sprecherunabhängige Akustikmodell (230, 232) wenigstens ein Hidden-Markov-Modell-(HMM)-Akustikmodell und wenigstens ein Dynamic-Time-Warping-(DTW)-Akustikmodell aufweist.

5. Spracherkennungsvorrichtung gemäß Anspruch 1, wobei das sprecherunabhängige Akustikmodell (230, 232) wenigstens eine Ausschussdatenvorlage beinhaltet, wobei das Vergleichen das Vergleichen der Eingabesprache mit wenigstens einer Ausschussdatenvorlage beinhaltet.

6. Spracherkennungsvorrichtung gemäß Anspruch 1, wobei das sprecherabhängige Akustikmodell (234) wenigstens ein Dynamic-Time-Warping-(DTW)-Akustikmodell aufweist.

7. Spracherkennungsvorrichtung gemäß Anspruch 1, wobei das computerlesbare Medium, das einen Satz von Instruktionen speichert, um nicht überwachtes Spracherkennungstrainieren und -testen durchzuführen, wobei der Satz von Instruktionen weiter angepasst ist, um:
die Spracherkennungs-Engine zu konfigurieren, um ein zweites Eingabesprachsegment mit den Inhalten des sprecherunabhängigen Akustikmodells und des sprecherabhängigen Akustikmodells zu vergleichen, um wenigstens einen kombinierten sprecherabhängigen und sprecherunabhängigen Abgleichswert zu generieren, und,
um eine Äußerungsklasse zu identifizieren, die den besten kombinierten sprecherabhängigen und sprecherunabhängigen Abgleichswert besitzt, wobei eine Äußerungsklasse ein bestimmtes Wort oder Sprachsegment ist.

8. Spracherkennungsvorrichtung gemäß Anspruch 7, wobei das sprecherunabhängige Akustikmodell wenigstens ein Hidden-Markov-Modell-(HMM)-Akustikmodell aufweist.

9. Spracherkennungsvorrichtung gemäß Anspruch 7, wobei das sprecherunabhängige Akustikmodell (230, 232) wenigstens ein Dynamic-Time-Warping-(DTW)-Akustikmodell aufweist.

10. Spracherkennungsvorrichtung gemäß Anspruch 7, wobei das sprecherunabhängige Akustikmodell (230, 232) wenigstens ein Hidden-Markov-Modell-(HMM)-Akustikmodell und wenigstens ein Dynamic-Time-Warping-(DTW)-Akustikmodell aufweist.

11. Spracherkennungsvorrichtung gemäß Anspruch 7, wobei das sprecherabhängige Akustikmodell (234) wenigstens ein Dynamic-Time-Warping-(DTW)-Akustikmodell aufweist.

12. Vorrichtung gemäß Anspruch 17, wobei die Mittel zum Durchführen und die Mittel zum Kombinieren in einer Spracherkennungs-Engine (220) enthalten sind.

13. Spracherkennungsvorrichtung gemäß Anspruch 7, wobei das sprecherunabhängige Akustikmodell (230, 232) wenigstens ein Hidden-Markov-Modell-(HMM)-Akustikmodell aufweist.

14. Spracherkennungsvorrichtung gemäß Anspruch 7, wobei das sprecherunabhängige Akustikmodell (230, 232) wenigstens ein Dynamic-Time-Warping-(DTW)-Akustikmodell aufweist.

15. Spracherkennungsvorrichtung gemäß Anspruch 7, wobei das sprecherunabhängige Akustikmodell (230, 232) wenigstens ein Hidden-Markov-Modell-(HMM)-Akustikmodell und wenigstens ein Dynamic-Time-Warping-(DTW)-Akustikmodell aufweist.

16. Spracherkennungsvorrichtung gemäß Anspruch 7, wobei das sprecherabhängige Akustikmodell (234) wenigstens ein Dynamic-Time-Warping-(DTW)-Akustikmodell aufweist.

17. Vorrichtung gemäß Anspruch 1, das weiterhin Folgendes aufweist:
Mittel zum Durchführen von Musterabgleich von dem Eingabesprachsegment mit einer sprecherabhängigen Akustikvorlage, um wenigstens einen sprecherabhängigen Abgleichswert zu generieren; und
Mittel zum Kombinieren von wenigstens einem sprecherunabhängigen Abgleichswert mit wenigstens einem sprecherabhängigen Abgleichswert, um wenigstens einen kombinierten Abgleichswert zu generieren.

## Revendications

1. Dispositif de reconnaissance vocale comprenant :
un modèle acoustique indépendant du locuteur (230, 232) ;
un modèle acoustique dépendant du locuteur (234) qui est ajusté à un locuteur ;
un moteur de reconnaissance vocale (220) ; et
un milieu lisible par ordinateur mémorisant un ensemble d'instructions pour réaliser un apprentissage et un test de reconnaissance vocale non supervisés, dans lequel l'ensemble d'instructions est adapté à :
réaliser un accord de motif de parole d'entrée en provenance du locuteur avec le contenu du modèle acoustique indépendant du locuteur pour produire des scores de concordance de motifs indépendants du locuteur ;
comparer les scores de concordance de motifs indépendants du locuteur à des scores associés à des gabarits mémorisés dans le modèle acoustique dépendant du locuteur; et
si les scores de concordance de motifs indépendants du locuteur sont plus grands que les scores associés à des gabarits mémorisés dans le modèle acoustique dépendant du locuteur (234), mémoriser un nouveau gabarit dans le modèle acoustique dépendant du locuteur sur la base des scores de concordance de motifs indépendants du locuteur.

2. Dispositif de reconnaissance vocale selon la revendication 1, dans lequel le modèle acoustique indépendant du locuteur (230, 232) comprend au moins un modèle acoustique à modèle de Markov caché (HMM).

3. Dispositif de reconnaissance vocale selon la revendication 1, dans lequel le modèle acoustique indépendant du locuteur (230, 232) comprend au moins un modèle acoustique à comparaison temporelle dynamique (DTW).

4. Dispositif de reconnaissance vocale selon la revendication 1, dans lequel le modèle acoustique indépendant du locuteur (230, 232) comprend au moins un modèle acoustique à modèle de Markov caché (HMM) et au moins un modèle acoustique à comparaison temporelle dynamique (DTW).

5. Dispositif de reconnaissance vocale selon la revendication 1, dans lequel le modèle acoustique indépendant du locuteur (230, 232) comprend au moins un gabarit de déchet, dans lequel la comparaison comprend la comparaison de la parole d'entrée audit au moins un gabarit de déchet.

6. Dispositif de reconnaissance vocale selon la revendication 1, dans lequel le modèle acoustique dépendant du locuteur (234) comprend au moins un modèle acoustique à comparaison temporelle dynamique (DTW).

7. Dispositif de reconnaissance vocale selon la revendication 1, dans lequel, dans le milieu lisible par ordinateur mémorisant un ensemble d'instructions pour réaliser un apprentissage et un test de reconnaissance vocale non supervisés, l'ensemble d'instructions est en outre adapté à :
configurer le moteur de reconnaissance vocale pour comparer un second segment de parole d'entrée au contenu du modèle acoustique indépendant du locuteur et du modèle acoustique dépendant du locuteur pour produire au moins un score de concordance combiné dépendant du locuteur et indépendant du locuteur ; et
identifier une classe de correspondance ayant le meilleur score de concordance combiné dépendant du locuteur et indépendant du locuteur, dans lequel une classe de correspondance est un mot particulier ou un segment de parole.

8. Dispositif de reconnaissance vocale selon la revendication 7, dans lequel le modèle acoustique indépendant du locuteur comprend au moins un modèle acoustique à modèle de Markov caché (HMM).

9. Dispositif de reconnaissance vocale selon la revendication 7, dans lequel le modèle acoustique indépendant du locuteur (230, 232) comprend au moins un modèle acoustique à comparaison temporelle dynamique (DTW).

10. Dispositif de reconnaissance vocale selon la revendication 7, dans lequel le modèle acoustique indépendant du locuteur (230, 232) comprend au moins un modèle acoustique à modèle de Markov caché (HMM) et au moins un modèle acoustique à comparaison temporelle dynamique (DTW).

11. Dispositif de reconnaissance vocale selon la revendication 7, dans lequel le modèle acoustique dépendant du locuteur (234) comprend au moins un modèle acoustique à comparaison temporelle dynamique (DTW).

12. Dispositif selon la revendication 7, dans lequel les moyens pour réaliser et les moyens pour combiner sont mis en oeuvre dans un moteur de reconnaissance vocale (220).

13. Dispositif de reconnaissance vocale selon la revendication 7, dans lequel le modèle acoustique indépendant du locuteur (230, 232) comprend au moins un modèle acoustique à modèle de Markov caché (HMM).

14. Dispositif de reconnaissance vocale selon la revendication 7, dans lequel le modèle acoustique indépendant du locuteur (230, 232) comprend au moins un modèle acoustique à comparaison temporelle dynamique (DTW).

15. Dispositif de reconnaissance vocale selon la revendication 7, dans lequel le modèle acoustique indépendant du locuteur (230, 232) comprend au moins un modèle acoustique à modèle de Markov caché (HMM) et au moins un modèle acoustique à comparaison temporelle dynamique (DTW).

16. Dispositif de reconnaissance vocale selon la revendication 7, dans lequel le modèle acoustique dépendant du locuteur (234) comprend au moins un modèle acoustique à comparaison temporelle dynamique (DTW).

17. Dispositif selon la revendication 1, comprenant en outre :
des moyens pour réaliser un accord de motifs du segment de parole d'entrée avec un gabarit acoustique dépendant du locuteur pour produire au moins un score de concordance dépendant du locuteur ; et
des moyens pour combiner le score de concordance indépendant du locuteur avec ledit au moins un score de concordance indépendant du locuteur pour produire au moins un score de concordance combiné.
